Europäisches Patentamt

European Patent Office

Office européen des brevets

(11) Veröffentlichungsnummer: **0 169 525**
**A2**

(12) **EUROPÄISCHE PATENTANMELDUNG**

(21) Anmeldenummer: 85109126.4

(22) Anmeldetag: 22.07.85

(51) Int. Cl.⁴: **G 11 B 5/702**

(30) Priorität: 27.07.84 DE 3427681

(43) Veröffentlichungstag der Anmeldung:
29.01.86 Patentblatt 86/5

(84) Benannte Vertragsstaaten:
DE FR GB NL

(71) Anmelder: BASF Aktiengesellschaft
Carl-Bosch-Strasse 38
D-6700 Ludwigshafen(DE)

(72) Erfinder: Lehner, August
Wachenheimer Strasse 4
D-6701 Roedersheim-Gronau(DE)

(72) Erfinder: Heil, Guenter, Dr.
Dirmsteiner Weg 41
D-6700 Ludwigshafen(DE)

(72) Erfinder: Lenz, Werner, Dr.
Heinrich-Baermann-Strasse 14
D-6702 Bad Duerkheim(DE)

(72) Erfinder: Balz, Werner, Dr.
Kropsburgstrasse 44
D-6703 Limburgerhof(DE)

(72) Erfinder: Kohl, Albert, Dr.
Schloss-Strasse 26
D-6711 Laumersheim(DE)

(72) Erfinder: Schornick, Gunnar, Dr.
Konrad-Adenauer-Strasse 8
D-6719 Neuleiningen(DE)

(54) Verfahren zur Herstellung schichtförmiger magnetischer Aufzeichnungsträger.

(57) Die Erfindung betrifft ein Verfahren zur Herstellung schichtförmiger magnetischer Aufzeichnungsträger durch Dispergieren eines feinteiligen magnetisch anisotropen Materials in einem Bindemittel, das zu mindestens 30 % aus einer strahlungshärtbaren wäßrigen Bindemitteldispersion besteht, Auftragen der Dispersion auf ein nichtmagnetisches Trägermaterial, ausrichten des magnetisch anisotropen Materials und Trocknen und Vernetzen der aufgetragenen Schicht mittels UV- oder energiereicher Elektronenstrahlung.

EP 0 169 525 A2

BASF Aktiengesellschaft                                    O.Z. 0056/37325

Verfahren zur Herstellung schichtförmiger magnetischer Aufzeichnungsträger

Die Erfindung betrifft ein Verfahren zur Herstellung von schichtförmigen
magnetischen Aufzeichnungsträgern, bestehend aus einem nichtmagnetischen
Trägermateial und darauf aufgebracht mindestens einer magnetisierbaren
Schicht aus in einem organischen Bindemittel feinverteiltem anisotropen
magnetischen Material unter Einsatz einer strahlungshärtbaren wäßrigen
Bindemitteldispersion.

Durch die Entwicklungen auf dem Gebiet der magnetischen Ton-, Bild- und
Datenspeicherung werden immer höhere Anforderungen an die magnetischen
Aufzeichnungsträger gestellt, während gleichzeitig die angestrebte breite
Nutzung dieser Technik ständige Steigerungen bezüglich der Zuverlässigkeit dieser Medien fordert. So erfordern höhere Aufzeichnungsdichten bei
allen genannten Anwendungsformen häufig die Herstellung dünnerer Magnetschichten. Aus diesem Grunde muß sowohl die Packungsdichte des magnetischen Materials in der Magnetschicht, die remanente Magnetisierung in
Aufzeichnungsrichtung, die gleichmäßige Verteilung des magnetischen
Materials in der Schicht sowie die Oberflächenglätte und die Gleichmäßigkeit der Schicht verbessert werden. Alle diese Forderungen, die bei
erhöhter Aufzeichnungsdichte hinsichtlich Fehlerfreiheit und Pegelkonstanz an die Magnetschicht gestellt werden, lassen sich in hohem Maße von
der Art des verwendeten Bindemittels beeinflussen. Wichtig ist, daß das
Bindemittel das magnetische Material gut benetzt, damit eine homogene
Verteilung in der Schicht erreicht wird, daß es einen guten Verlauf und
eine gute Filmbildung aufweist, damit die Magnetschicht eine einwandfreie
Oberfläche erhält und daß es der Magnetschicht die der Beanspruchung
entsprechende mechanische Stabilität verleiht.

Um derartige magnetische Aufzeichnungsträger herzustellen, wurden bisher
die das magnetische Material enthaltenden Schichten vorwiegend mit Hilfe
hochpolymerer, lösungsmittelhaltiger, physikalisch trocknender oder
chemisch vernetzbarer Bindemittel oder Bindemittelgemischen hergestellt.
Dabei kamen Lösungsmittel wie zum Beispiel Methylethylketon, Methylisobutylketon, Ethyl- und Butylacetat, Methanol, Ethanol, Propanol, Butanol,
Toluol, Xylol, Tetrahydrofuran und Dioxan zum Einsatz. Von Nachteil sind
dabei die nicht umweltfreundlichen Eigenschaften, vor allem Feuergefährlichkeit und Toxizität dieser Lösungsmittel sowie der relativ hohe Preis.
Aus diesen Gründen wurde es schon seit langem als erforderlich angesehen,
in geschlossenen Systemen zu arbeiten und das Lösungsmittel über eine
zusätzlich zu installierende Rückgewinnungsanlage im Kreislauf zu benutzen.

Da die physikalisch trocknenden Bindemittel nicht mehr in ausreichendem Maße den Anforderungen, die an hochwertige Aufzeichnungsträger gestellt werden, genügen, wurde auch schon die Vernetzung hochmolekularer thermoplastischer Bindemittel, beispielsweise mit Polyisocyanaten, vorgeschlagen. Die Nachteile bei einem solchen Vorgehen bestehen darin, daß die Vernetzungsreaktionen sehr empfindlich auf Temperatureinflüsse und Feuchtigkeitsgehalte reagieren und diese Art von Vernetzung eine genaue Dosierung der Komponenten erforderen. Da bei dieser Verfahrensweise zudem das Vernetzungsmittel mit all seinen unerwünschten Nebenwirkungen in der Magnetschicht verbleibt, wurde auch versucht, strahlungshärtende Bindemittel einzusetzen, wie z.B. Butadien-Acrylonitril (US-PS 3 104 983) oder Mischungen aus hochmolekularen thermoplastischen Polymeren und polyfunktionale Acrylat-Prepolymere (WO 82/01099). Von Nachteil ist hierbei auch der Einsatz von organischen Lösungsmitteln.

Andererseits wurde schon vorgeschlagen, wäßrige Polymerdispersionen bei der Herstellung der für die Fertigung von magnetischen Aufzeichnungsträgern geeigneten Dispersionen der magnetischen Materialien einzusetzen. So beschreiben die DE-OS 2 513 421 und DE-OS 2 513 422 wäßrige Polymerdispersionen auf der Basis vernetzungsfähiger Vinylacetat- oder Acrylat-Polymer und Melamin/Formaldehyd. Die bei der Herstellung dieser Dispersionen benötigten Hilfsstoffe, wie Schutzkolloide, Verdickungsmittel oder Emulgatoren, führen jedoch bei der Herstellung der Dispersionen der magnetischen Materialien zu Schaumbildung und zu magnetischen Schichten mit erhöhter Schmierneigung. Auch gemäß der DD-PS 116 963 werden Magnetschichten mit wäßrigen Dispersionen hergestellt. Die dabei eingesetzten Bindemittel ergeben jedoch Schichten, welche gegen Feuchtigkeit empfindlich sind, zum Kleben und Schmieren neigen und wenig abriebfeste Oberflächen ergeben. Der Einsatz von vernetzten kationischen Polyurethanen zur Beschichtung von Leder und Textil und auch für die Herstellung von Magnetschichten wird in der DD-PS 116 248 vorgeschlagen. Dabei ist jedoch von Nachteil, daß bereits geringe pH-Unterschiede zwischen magnetischem Material und Bindemittel das genannten Polyurethan anvernetzen oder zum Teil koagulieren lassen, wodurch die Verarbeitbarkeit der Magnetdispersion als auch die Qualität des Aufzeichnungsträgers beeinträchtigt wird.

Aufgabe der Erfindung war es daher, aufgrund der bekannter Vorteile wäßriger Polymerdispersionen, schichtförmige magnetische Aufzeichnungsträger mit Hilfe strahlungshärtbarer wäßriger Bindemittel herzustellen, wobei die geschilderten Nachteile nicht auftreten, d.h. die Aufzeichnungsträger nicht feuchtigkeitsempfindlich sind, nicht zum Verkleben neigen, einen geringen Schichtabrieb aufweisen und eine ausgeprägt glatte Oberfläche bei günstigem Fehlerverhalten zeigen.

Es wurde nun gefunden, daß sich schichtförmige magnetische Aufzeichnungsträger durch Dispergieren eines feinteiligen magnetisch anisotropen Materials in einem Bindemittel, das zu mindestens 30 % aus einer strahlungshärtbaren wäßrigen Bindemitteldispersion besteht, Auftragen der Dispersion auf ein nichtmagnetisches Trägermaterial, Ausrichten des magnetisch anisotropen Materials und Trocknen und Vernetzen der aufgetragenen Schicht gemäß der Aufgabe herstellen lassen, wenn die strahlungshärtbare wäßrige Bindemitteldispersion im wesentlichen besteht aus

(A)  20 bis 80 Gewichtsprozent Wasser,

(B)  80 bis 20 Gewichtsprozent mindestens eines in (A) dispergierten Präpolymeren mit einem Gehalt von 0,01 bis 1,0 Mol pro 100 g Präpolymer an polymerisierbaren C-C-Doppelbindungen, einem mittleren Molekulargewicht von mindestens 350 sowie einer Viskosität bei 23°C von mindestens 600 cP,

mit der Maßgabe, daß die Summe unter (A) und (B) genannten Prozentzahlen gleich 100 ist, sowie zusätzlich

(C)  0,1 bis 30 Gewichtsprozent, bezogen auf (B), mindestens eines Dispergierhilfsmittels,

wobei der vernetzte unpigmentierte Polymerfilm eine Dehnung von größer 10 %, eine Reißkraft von größer 10 $N/mm^2$ und einem E-Modul von größer 100 $N/mm^2$ aufweisen.

Bevorzugt als Komponente (B) sind polymerisierbare C-C-Doppelbindungen enthaltende Polyester mit einer Säurezahl von höchstens 10, polymerisierbare C-C-Doppelbindungen enthaltende Polyether, hydroxylgruppenhaltige Umsetzungsprodukte aus einem mindestens zwei Epoxidgruppen pro Molekül enthaltenden Polyepoxid mit mindestens einer $\alpha$- und/oder ß-ethylenisch ungesättigten Carbonsäure, Polyurethan(meth-)acrylate sowie $\alpha$- und/oder ß-ethylenisch ungesättigte Acylreste enthaltende Acrylcopolymere.

Die Herstellung dieser strahlungshärtbaren wäßrigen Bindemitteldispersionen ist an sich bekannt (DE-OS 28 53 921). Dabei wird eine Lösung der Komponente (B) in einem inerten organischen Lösungsmittel oder Lösungsmittelgemisch mit einer wäßrigen Lösung der Komponente (C) gemischt und das inerte organische Lösungsmittel oder Lösungsmittelgemisch destillativ entfernt. Evtl. zusätzlich übliche Hilfs- und Zusatzstoffe können hier- bei der Lösung der Komponente (B) oder nach der destillativen Entfernung des inerten organischen Lösungsmittels oder Lösungsmittelgemisches zugefügt werden. Diese strahlungshärtbaren wäßrigen Bindemitteldispersionen sind praktisch frei von umweltschädigenden flüchtigen Bestandteilen, wie Monomeren oder Cosolventien.

Geeignete Ausgangsstoffe für den Aufbau der strahlungshärtbaren wäßrigen Bindemitteldispersionen sind:

(A) Die Komponente (A) ist Wasser, das in einer Konzentration von 20 bis 80, vorzugsweise 30 bis 60 Gew.-% vorliegt.

(B) Die Komponente (B) ist ein in Wasser dispergiertes, in besonderen Fällen gelöstes, filmbildendes Präpolymeres bzw. Präpolymerengemisch mit einem Gehalt von 0,01 bis 1,0, vorzugsweise 0,04 bis 0,6 Mol pro 100 g Substanz an polymerisierbaren Doppelbindungen, einem mittleren Molekulargewicht von mindestens 350, vorzugsweise mindestens 600, sowie einer Viskosität (nach DIN-Entwurf 53 788) bei 23°C von mindestens 600, vorzugsweise 1000 cP. Dieses Präpolymere kann z.B. sein:

1) Ein Polyester mit einer Säurezahl von höchstens 10 aus aliphatischen und/oder aromatischen Dicarbonsäuren, wie Bernsteinsäure, Glutarsäure, Adipinsäure, Pimelinsäure, Korksäure, Azelainsäure, Sebacinsäure, Cyclohexandicarbonsäure, Phthalsäure, Isophthalsäure, Terephthalsäure, Maleinsäure, Fumarsäure, Itakonsäure bzw. deren Derivate, und mehrwertigen Alkoholen, wie Ethylenglykol, Polyethylenglykole, Propylenglykol, Polypropylenglykole, Butandiol, Hexandiol, Neopentylglykol, Hydroxypivalinsäureneopentylglykolester, Trimethylolpropan, Glycerin, Pentaerythrit und/oder Trishydroxyethylisocyanurat, sowie $\alpha$- und/oder ß-ethylenisch ungesättigten Monocarbonsäuren, beispielsweise Acrylsäure, Methacrylsäure, Crotonsäure, Zimtsäure und/oder Dicarbonsäurehalbester von Monoalkanolen, wie Malein-, Fumar- und Itakonsäurehalbester mit $C_1$- bis $C_4$-Monoalkoholen, wobei Acrylsäure und Methacrylsäure bevorzugt sind, welcher nach den üblichen Verfahren in einem Schritt oder auch stufenweise hergestellt werden kann,

2) ein aliphatischer oder araliphatischer Polyether, welcher durch Umsetzung von zwei- und/oder mehrwertigen Alkoholen, die auch unter 1) genannt sind, mit verschiedenen Mengen an Ethylen- und/oder Propylenoxid erhalten wird und dessen freie Hydroxylgruppen ganz oder teilweise mit ethylenisch ungesättigten Alkoholen, beispielsweise Allylalkohol, Methallylalkohol, Cortylalkohol, Zimtalkohol, verethert und/oder mit $\alpha$- und/oder

ß-ethylenisch ungesättigten Monocarbonsäuren, wie unter 1) genannt, verestert sind,

3) eine **ungesättigte hydroxylgruppenhaltige Verbindung** durch Umsetzung eines Polyepoxids mit durchschnittlich mindestens 2 Epoxidgruppen pro Molekül, beispielsweise Polyglycidylether mehrwertiger Alkohole, wie sie unter 1) genannt sind, Polyglycidylether mehrwertiger Phenole, wie Bisphenol A, Glycidylester mehrwertiger Carbonsäuren, wie sie auch unter 1) genannt sind, andere Glycidylverbindungen, beispielsweise Triglycidylisocyanurat und/oder epoxidierte natürliche oder synthetische Öle, mit $\alpha$- und/oder ß-ethylenisch ungesättigten Carbonsäuren, wie sie auch unter 1) genannt sind, hergestellt werden kann,

4) ein **gegebenenfalls Harnstoffgruppen enthaltendes Polyurethan**, das aus aliphatischen und/oder aromatischen Polyisocyanaten, beispielsweise Tetramethylendiisocyanat, Hexamethylendiisocyanat, Isophorondiisocyanat, Diphenylmethandiisocyanat, Toluylendiisocyanat, Naphthylendiisocyanat, 4,4'-Diphenyletherdiisocyanat, gegebenenfalls daraus hervorgehende Di- oder Trimere sowie deren Umsetzungsprodukte mit untergeordneten Mengen wasserstoffaktiver Verbindungen, wie z.B. mehrwertigen Alkoholen, die auch unter 1) genannt sind, polyfunktionellen Aminen und/oder Aminoalkoholen, durch Umsetzung mit hydroxylgruppenhaltigen (Meth-)acrylsäureestern, wie Hydroxyethyl(meth-)acrylat, Hydroxypropyl(meth-)acrylat und/oder Butandiolmono(meth-)acrylat, hergestellt werden kann,

5) ein **Polymeres**, das durch Einführung von $\alpha$- und/oder ß-ethylenisch ungesättigten Acylresten, die sich beispielsweise von den unter 1) genannten $\alpha$- und/oder ß-ethylenisch ungesättigten Monocarbonsäuren ableiten, in durch gewöhnliche Lösungspolymerisation hergestellte Acrylatcopolymere, Styrol/Acrylat-Copolymere oder dergleichen, mit einem Gehalt von mindestens 0,02 Mol Hydroxyl-, Carboxyl- und/oder Epoxygruppen pro 100 g Substanz, erhalten werden kann.

Desgleichen eignen sich auch Gemische der unter 1) bis 5) genannten Präpolymeren. Komponente (B) ist in den angegebenen wäßrigen Bindemitteldispersionen in Mengen von 80 bis 20, vorzugsweise 70 bis 40 Gewichtsprozent, enthalten.

(C) Die Komponente (C) ist ein übliches Dispergierhilfsmittel, das in den strahlungshärtbaren wäßrigen Bindemitteldispersionen in Mengen von 0,1 bis 30, vorzugsweise 3 bis 12 Gewichtsprozent, bezogen auf (B), enthalten ist. Dabei handelt es sich vorzugsweise um wasserlösliche hochmolekulare organische Verbindungen mit polaren Gruppen, wie z.B. Polyvinylpyrrolidon, Copolymerisate aus Vinylpropionat bzw. -acetat und Vinylpyrrolidon, teilverseifte Copolymerisate aus Acrylester und Acrylnitril, Polyvinylalkohole mit unterschiedlichem Restacetatgehalt, Celluloseether, Gelatine oder Mischungen dieser Stoffe. Besonders bevorzugte Schutzkolloide sind Polyvinylalkohol mit einem Restacetatgehalt von unter 35, insbesondere 5 bis 30 Molprozent und/oder ein Vinylpyrrolidon-/Vinylpropionat-Copolymeres mit einem Vinylestergehalt von unter 35, insbesondere 5 bis 30 Gewichtsprozent.

Außerdem können nichtionische, in besonderen Fällen auch ionische Emulgatoren verwendet werden. Bevorzugte Emulgatoren sind längerkettige Alkohole oder Phenole unterschiedlichen Ethoxy- und/oder Propoxylierunggrades (Addukte von 4 bis 50 Mol Ethylenoxid und/oder Propylenoxid). Besonders vorteilhaft sind Kombinationen der oben genannten Schutzkolloide mit derartigen Emulgatoren, da mit ihnen feinteiligere Dispersionen erhalten werden.

Im Rahmen der Erarbeitung des erfindungsgemäßen Verfahrens hat es sich ebenfalls als vorteilhaft herausgestellt, wenn die strahlungshärtbaren wäßrigen Bindemitteldispersionen mit nichtstrahlungshärtbaren wäßrigen Bindemitteldispersionen kombiniert werden. Im allgemeinen eignen sich hierfür Mischungen aus 40 bis 95 % strahlungshärtbare und 5 bis 60 % nichtstrahlungshärtbare Dispersionen.

Die Herstellung der magnetischen Aufzeichnungsträger erfolgt in allgemein üblicher Weise.

Als Magnetpigmente können die an sich bekannten verwendet werden, die die Eigenschaften der resultierenden Magnetschichten natürlich mitbestimmen. Als geeignete Magnetpigmente seien beispielhaft genannt: Gamma-Eisen(III)-oxid, feinteiliger Magnetit, ferromagnetisches undotiertes oder dotiertes Chromdioxid, kobaltdotiertes Gamma-Eisen(III)-oxid sowie ferromagnetische Metalle und Metallegierungspigmente, wie Legierungen aus Eisen und Kobalt (z.B. hergestellt nach den Angaben in der deutschen Patentschrift 1 247 026). Bevorzugte Magnetpigmente sind nadelförmiges Gamma-Eisen(III)-oxid sowie ferromagnetisches Chromdioxid. Die Teilchengröße beträgt im allgemeinen 0,2 bis 2 µm, bevorzugt ist der Bereich von 0,3 bis 0,8 µm.

**0169525**

In an sich bekannter Weise können die Magnetschichten ferner in kleinen Mengen Zusätze wie Dispergiermittel und/oder Gleitmittel, aber auch Füllstoffe enthalten, die bei der Dispergierung der Magnetpigmente oder bei der Herstellung der Magnetschicht zugemischt werden. Beispiele solcher Zusätze sind Fettsäuren oder isomerisierte Fettsäuren, wie Stearinsäure oder deren Salze mit Metallen der ersten bis vierten Hauptgruppe des Periodensystems der Elemente, amphotere Elektrolyte, wie Lecithin sowie Fettsäureester oder Wachse, Siliconöle, Ruß usw. Besonders zweckmäßig ist ein Dispergiermittel, das hergestellt wird aus 25 bis 85 % eines Polyetheracrylats mit 2 bis 10 Ethergruppen pro Doppelbindung und 15 bis 75 % Acrylsäure oder Methacrylsäure. Die Menge der Zusätze ist die an sich übliche, sie liegt im allgemeinen unter 10 Gew.-%, bezogen auf die Magnetschicht.

Das Verhältnis von Magnetpigment zu Bindemittel in den erfindungsgemäßen Aufzeichnungsmaterialien liegt im allgemeinen zwischen 1 bis 10 und insbesondere 3 bis 6 Gew.-Teilen Magnetpigment zu einem Gew.-Teil des Bindemittels bzw. Bindemittelgemisches. Es ist ein besonderer Vorteil, daß aufgrund des vorzüglichen Pigmentbindevermögens der wäßrigen Bindemitteldispersionen hohe Magnetpigmentkonzentrationen in den Magnetschichten möglich sind, ohne daß die mechanischen Eigenschaften verschlechtert werden oder die Anwendungseigenschaften merklich in Mitleidenschaft gezogen werden.

Als nichtmagnetische und nichtmagnetisierbare Träger lassen sich die üblichen starren oder flexiblen Trägermaterialien verwenden, insbesondere Folien aus linearen Polyestern, wie Polyethylenterephthalat, im allgemeinen in Stärken von 4 bis 200µm und insbesondere von 6 bis 36 µm. In neuerer Zeit ist auch die Verwendung von Magnetschichten auf Papierträgern für Zwecke der mittleren Datentechnik bedeutend geworden; auch hierfür lassen sich die erfindungsgemäßen Beschichtungsmassen vorteilhaft verwenden.

Zur Herstellung der magnetischen Aufzeichnungsträger wird in einer Dispergiermaschine, z.B. einer Stahlkugelmühle oder einer Rührwerksmühle, aus dem Magnetpigment und der wäßrigen Bindemitteldispersion unter Zusatz von Dispergiermitteln und anderen Zusätzen eine Magnetpigmentdispersion hergestellt, filtriert und mit der üblichen Beschichtungsmaschine, z.B. mittels eines Linealgießers, auf den Träger aufgetragen. In der Regel erfolgt eine magnetische Ausrichtung, bevor die flüssige Beschichtungsmischung auf dem Träger getrocknet wird; letzteres geschieht zweckmäßigerweise während 2 bis 5 Minuten bei Temperaturen von 60 bis 120°C. Die Magnetschichten werden dann auf üblichen Maschinen durch Hindurchführen zwischen geheizten und polierten Walzen, ggf. bei Anwendung von Druck und Temperaturen von 50 bis 100°C, vorzugsweise 60 bis 80°C, geglättet und verdichtet. Die Dicke der Magnetschicht beträgt im allgemeinen 0,5 bis 20 µm, vorzugsweise 4 bis 10 µm. Zur Härtung werden die Magnetschichten anschließend kurzzeitig einer UV- oder energiereichen Elektronenstrahlung ausgesetzt. Hierzu werden die üblicherweise für die Härtung von Überzügen eingesetzten UV- bzw. Elektronenstrahlungsquellen verwendet, wie z.B. beschrieben in UV Curing: Science and Technology, Editor: S. Peter Pappas, Technology Marketing Corporation, Stanford, USA, 1978 und Atomic Radiation and Polymers, Charlesby, Pergamon Press, 1960.

Diese erfindungsgemäß hergestellten magnetischen Aufzeichnungsträger besitzen gegenüber solchen, welche mit dem Stand der Technik entsprechenden Bindemitteln hergestellt sind, eine verbesserte Homogenität der Magnetschicht und aufgrund dieser sowohl gleichmäßigen wie auch homogenen Magnetschicht ein deutlich verringertes Fehlerniveau. Zusätzlich muß noch die verbesserte Verschleißfestigkeit und die verringerte Empfindlichkeit gegen Feuchtigkeitseinfluß der erfindungsgemäß hergestellten magnetischen Aufzeichnungsträger hervorgehoben werden. Diese Vorteile lassen sich zudem noch mit einem Bindemittelsystem erreichen, bei dem die bekannten Nachteile und Risiken beim Einsatz von organischen Lösungsmitteln vermieden werden. Weitere Vorteile des erfindungsgemäßen Verfahrens liegen in der hohen Thermoplastizität der speziellen eingesetzten Bindemittel vor der Härtung, wodurch sich gute Filme, d.h. eine ausgezeichnete Oberfläche der Schicht herstellen lassen, deren mechanische Festigkeit sich durch die abschließende Härtung noch wesentlich verbessern läßt.

Das erfindungsgemäße Verfahren sei anhand des folgenden Beispiels näher erläutert:

Beispiel

A. Herstellung des Präpolymeren

0,4 Äquiv. eines Polyesters (aus Adipinsäure und Butandiol-1,4; OHZ 110), 0,5 Äquiv. Butandiol-1,4 und 0,1 Äquiv. Trimethylolpropan wurden in 250 Teilen Methylethylketon vorgelegt und mit 1,25 Äquiv. Toluylendiisocyanat (Isomerengemisch aus 2,4- und 2,6-TDI) bei 55°C umgesetzt. Nach 1 h wurden 0,25 Äquiv. Butandiolmonoacrylat zugesetzt und die Umsetzung bis zu einem NCO-Wert > 0,1 % weitergeführt.

B. Herstellung der Bindemitteldispersion

500 Teile der 60%igen Lösung des Präpolymeren wurden bei Raumtemperatur innerhalb 1 h zu 200 Teilen einer 15%igen wäßrigen Lösung eines Copolymerisats aus 66 Teilen N-Vinylpyrrolidon und 34 Teilen Vinylpropionat unter starkem Rühren zugegeben. Bei einem Druck von 90 bis 100 mbar und einer anfänglichen Innentemperatur von 40 bis 45°C wurde dann unter stufenweiser Zugabe von 270 Teilen Wasser das Methylethylketon azeotrop mit Wasser entfernt. Der Feststoffgehalt der Dispersion betrug 46,7 %.

C. Herstellung des Magnetbandes

Aus 100 Teilen eines $\gamma$-$Fe_2O_3$ mit einer Koerzitivfeldstärke von 26,5 kA/m, 2 Teilen eines Polymerisates aus einem Polyetheracrylat mit 5 Ethergruppen pro Doppelbindung und Acrylsäure, 2,5 Teilen eines handelsüblichen Dispergiermittels auf der Basis der Salze von Fettsäuren, 80 Teilen Wasser und 60 Teilen der Bindemitteldispersion nach B. wurde in einer Kugelmühle innerhalb von 40 Stunden eine Dispersion hergestellt.

Mit der so erhaltenen Magnetmaterial-Dispersion wurde nach dem Filtrieren durch einen Papierfilter mit einer Porenweite von 5µm mittels eines üblichen Linealgießers eine Polyethylenterephthalatfolie von 12 µm Dicke beschichtet. Vor der Trocknung bei 60 bis 120°C wird die beschichtete Folie zur Ausrichtung der Gamma-Eisen(III)-oxid-Teilchen durch ein homogenes Magnetfeld geführt. Danach erfolgte noch eine Glättung der Schicht durch Kalandrieren bei 60°C und 23 N/mm$^2$ Liniendruck. Die Dicke der Magnetschicht beträgt 5,0 $\pm$ 0,3 µm. Die beschichtete Folie wurde anschließend in einer Elektronenstrahlanlage (Beschleunigungsspannung 160 kV) mit einer Aushärtungsdosis von 70 Joule/g gehärtet.

Nach dem Schneiden auf eine Bandbreite von 3,81 mm wurden nach DIN 45 401, 45 403 und 45 512 (Blatt 82) gegen das Bezugsband T 308 S folgende elektroakustische Werte ermittelt.

$E_T$:   + 0,2 dB
$E_H$:   - 1,0 dB
$A_T$:   $\pm$   0 dB
$A_H$:   - 0,6 dB
$K_O$:   + 2,0 dB
$R_{GA}$:  + 2,1 dB

Die Messung der mechanischen Eigenschaften erfolgte gemäß nachfolgender Tests:

### Test 1
Reinigungskoeffizient Schicht/Stahl, vor/nach Dauerlauf

Die Bestimmung der Reibungszahlen erfolgte nach DIN 45 522, Blatt 1. Die Reibungskoeffizienten wurden am unbenutzten Band und am durch Durchlauf benutzten Band gemessen. Das Ergebnis war 0,23/0,26.

### Test 2
Quasistatische Reibung

Die Reibungszahl wurde durch Messen einer Zugkraft bestimmt, die ein über eine feststehende Meßtrommel geführtes Magnetband durch Reibung erzeugte. Die Meßtrommel war eine Stahltrommel mit einer Oberflächenrauhigkeit von ca. 0,15 µm und einem Durchmesser von 70 mm. Das Bandstück war 25 cm lang und wurde bei einem Band von 20 cN mit einer Geschwindigkeit von 1 mm/sec und einem Umschlingungswinkel von 180°C über die Trommel geführt. Der Zug an der Meßdose F ist ein Maß für die Reibungszahl µ, und zwar nach
$\mu = \frac{1}{\pi}$. hr $\frac{F}{20}$. Das Ergebnis war µ = 0,14.

### Test 3
Dynamische Reibung

Die Reibungszahl hierfür wurde entsprechend dem Verfahren nach Test 2 gemessen, mit dem Unterschied, daß sich die Meßtrommel mit einer Geschwindigkeit von 9,5 cm/sec drehte. Das Ergebnis war µ = 0,28.

### Test 4
Dauerlauf-Abrieb

Mit dieser Messung werden die Abriebeeigenschaften eines Bandes beurteilt. Es wurde der Abrieb in Form des Gewichtsverlustes einer Bandschleife in mg gemessen. Dabei betrug die Schleifenlänge 95 cm, die Bandgeschwindigkeit 4 m/sec, der Bandzug 35 cN und die Laufzeit 1 Stunde, bei einer Umgebungstemperatur von 23°C und einer rel. Luftfeuchte von 50 %. Das Ergebnis war 0,1 mg.

## Patentansprüche

1. Verfahren zur Herstellung schichtförmiger magnetischer Aufzeichnungsträger durch Dispergieren eines feinteiligen magnetisch anisotropen Materials in einem Bindemittel, das zu mindestens 30 % aus einer strahlungshärtbaren wäßrigen Bindemitteldispersion besteht, Auftragen der Dispersion auf ein nichtmagnetisches Trägermaterial, Ausrichten des magnetisch anisotropen Materials und Trocknen und Vernetzen der aufgetragenen Schicht, dadurch gekennzeichnet, daß die strahlungshärtbare wäßrige Bindemitteldispersion im wesentlichen besteht aus

   (A) 20 bis 80 Gew.-% Wasser,

   (B) 80 bis 20 Gew.-% mindestens eines in (A) dispergierten Präpolymeren mit einem Gehalt von 0,01 bis 1,0 Mol pro 100 g Präpolymer an polymersierbaren C-C-Doppelbindungen, einem mittleren Molekulargewicht von mindestens 350 sowie einer Viskosität bei 23°C von mindestens 600 cP,

   mit der Maßgabe, daß die Summe der unter (A) und (B) genannten Prozentzahlen gleich 100 ist, sowie zusätzlich

   (C) 0,1 bis 30 Gew.-%, bezogen auf (B), mindestens eines Dispergierhilfsmittels,

   wobei der vernetzte unpigmentierte Polymerfilm eine Dehnung von größer 10 %, eine Reißkraft von größer 10 N/mm$^2$ und einen E-Modul von größer 100 N/mm$^2$ aufweisen.

2. Verfahren gemäß Anspruch 1, dadurch gekennzeichnet, daß die Komponente (B) ein polymerisierbare C-C-Doppelbindung enthaltender Polyester mit einer Säurezahl von höchstens 10 ist.

3. Verfahren gemäß Anspruch 1, dadurch gekennzeichnet, daß die Komponente (B) ein polymerisierbare C-C-Doppelbindungen enthaltender Polyether ist.

4. Verfahren gemäß Anspruch 1, dadurch gekennzeichnet, daß die Komponente (B) ein hydroxylgruppenhaltiges Umsetzungsprodukt aus einem mindestens zwei Epoxidgruppen pro Molekül enthaltenden Polyepoxid mit mindestens einer $\alpha$- und/oder ß-ethylenisch ungesättigten Carbonsäure ist.

5.   Verfahren gemäß Anspruch 1, dadurch gekennzeichnet, daß die Komponente (B) ein gegebenenfalls Harnstoffgruppen enthaltendes Polyurethan-(meth)acrylat ist.

6.   Verfahren gemäß Anspruch 1, dadurch gekennzeichnet, daß die Komponente (B) ein polymerisierbare Doppelbindungen enthaltendes Polymeres ist, das durch Einführung von $\alpha$- und/oder ß-ethylenisch ungesättigten Acylresten in Acrylatcopolymere erhalten wird.

7.   Verfahren gemäß Anspruch 1, dadurch gekennzeichnet, daß die Komponente (B) ein thermoplastisches Polyurethanelastomeres mit end- oder seitenständigen (Meth-)Acrylesterdoppelbindungen besitzt mit einem Molekulargewicht zwischen 1000 und 70 000 ist.

8.   Verfahren gemäß Anspruch 1, dadurch gekennzeichnet, daß die Komponente (C) ein Polyvinylalkohol mit einem Restacetatgehalt von weniger als 35 Molprozent und/oder ein Vinylpyrrolidon-Vinylester-Copolymeres mit einem Vinylestergehalt von weniger als 35 Gew.-% ist.

9.   Verfahren gemäß Anspruch 1, dadurch gekennzeichnet, daß die Komponente (B) zu 40 bis 95 % aus strahlungshärtbarer Dispersion und zu 5 bis 60 % aus nicht strahlungshärtbarer Dispersion besteht.